# EUROPÄISCHE PATENTANMELDUNG

(11) **EP 0 618 543 A2**
(43) Veröffentlichungstag der Anmeldung: **05.10.1994**
(21) Anmeldenummer: 94250085.1
(22) Anmeldetag: 31.03.1994
(51) Int. Cl.: G06K 7/12, G06K 19/06, G06K 19/16

(54) **Identifikationssystem**

(30) Priorität: 02.04.1993 DE 4311295
(71) Anmelder: BORUS SPEZIALVERFAHREN UND- GERÄTE IM SONDERMASCHINENBAU GmbH, D-12459 Berlin (DE)
(72) Erfinder: Fisun, Oleg Ivanovich, Prof., 119034 Moskau (RU); Lupichev, Lev Nikolaevich, 119034 Moskau (RU); Maklakov, Viktor Vassilevich, 119034 Moskau (RU); Schimko, Richard, prof.Dr., D-10179 Berlin (DE)
(74) Vertreter: Christiansen, Henning, Dipl.-Ing.

(57) **Zusammenfassung**

Beschrieben wird ein Identifikationssystem, insbesondere für Personen (P, P'), mit
- einem Aufzeichnungsträger (1; G, 20), der mindestens eine mit den menschlichen Sinnesorganen nicht wahrnehmbare, für eine bestimmte Person (P, P') oder einen Gegenstand (G) charakteristische Kennzeichnung (IA, IB, IC; K) trägt,
- einer Vorrichtung (2; 22, 23) zur Aufprägung der Kennzeichnung (IA, IB, IC; K) auf den Aufzeichnungsträger (1; G, 20) und
- einer Vorrichtung (8) zum Lesen und Auswerten der Kennzeichnung,

wobei der Aufzeichnungsträger (1; G, 20) eine nur in ultraviolettem Licht eines vorbestimmten Wellenlängenbereiches lesbare Aufzeichnung trägt, die die Kennzeichnung (IA, IB, IC; K) enthält und die Vorrichtung zum Aufprägen (2; 22, 23) eine Einrichtung zur Erzeugung (7) und die Vorrichtung (8) zum Lesen und Auswerten eine Einrichtung zum Lesen der Aufzeichnung mittels des ultravioletten Lichts aufweisen.

## Beschreibung

Die Erfindung betrifft ein Identifikationssystem der im Oberbegriff des Anspruchs 1 angegebenen Art.

Derartige Identifikationssysteme sind bereits aus dem täglichen Leben bekannt, vor allem in Gestalt der Geldkarte-Bankomat-Systeme, bei denen eine Person einen Aufzeichnungsträger mit einer nicht mit den menschlichen Sinnesorganen wahrnehmbaren Kennzeichnungsinformation (Geldkarte mit magnetischer Codierung) besitzt und etwa zur Abhebung von Bargeld an einem Geldauszahlungsautomaten benutzt, der eine Vorrichtung zum Lesen und Auswerten der Kennzeichnungsinformation aufweist.

Dieses System umfaßt in der Maschine zur Herstellung der Geldkarte auch eine Vorrichtung zur (anfänglichen einmaligen) Aufprägung der Kennzeichnungsinformation auf den Aufzeichnungsträger.

Solche Systeme haben weiterhin Verbreitung im Rahmen von Kredit- und Kundenkarten-Systemen sowie bei der Handhabung von Zutrittsberechtigungen für Gebäude gefunden.

Ein prinzipieller Nachteil der meisten inzwischen eingebürgerten Systeme ist die Mißbrauchsgefahr durch Personen, die sich unberechtigt in den Besitz einer Geld-, Kunden- oder Kennkarte gesetzt haben.

Die übliche Zuweisung von individuellen Codenummern an die Berechtigten durch den Ausgeber der Karten bietet zwar hier einen gewissen Schutz, aber bei Lücken in der Geheimhaltung dieser Codenummern können diese letztlich ebenfalls kein Schutz vor mißbräuchlicher Verwendung der Karte mehr sein.

Ein bekannter Gedanke zur Lösung des Problems, einen Mißbrauch von Kenn-, Kunden- o.ä. Karten durch Unbefugte zu erschweren, besteht darin, bei Benutzung der Karte eine Identitätsprüfung des Vorlegers anhand äußerlicher Merkmale oder seiner Unterschrift vorzunehmen.

Dies erfordert das Vorliegen eines Fotos bzw. einer Unterschriftenprobe an jedem möglichen Ort der Vorlage der Karte.

Dies wiederum ist (bei Ausklammerung der bei größeren Systemen prinzipiell mit sehr großem Aufwand verbundenen Hinterlegung an jedem möglichen Vorlage-Ort) zum einen durch Anbringung auf der Karte selbst oder zum anderen über die On-Line-Bereitstellung aus einem zentralen Datenspeicher möglich.

Die erste Möglichkeit ist erfahrungsgemäß mit erheblicher Fälschungsgefahr verbunden, die zweite erfordert erheblichen Bedienaufwand für die Aktivierung der Datenübertragungswege und ist wegen der nicht vernachlässigbaren Zugriffs-, Übertragungs- und Verarbeitungszeiten auch relativ zeitaufwendig.

Die Fälschungsgefahr kann - etwa auf die in der DE-28 45 567-A1 beschriebene Weise - durch Kombination mehrerer Kennzeichnungen auf einer Personenkennkarte und ggf. ein technisch aufwendiges Aufbringungsverfahren weiter vermindert, jedoch nicht ausgeräumt werden.

In der DE-41 25 198-A1 ist auch vorgeschlagen worden, jeder zum Zugriff auf ein Datensystem befugten Person ein tragbares Gerät zuzuweisen, das einen Datenchip und eine Abtastvorrichtung für die Fingerkuppe enthält. Diese Funktionseinheit ist jedoch recht aufwendig in der Herstellung und weitaus schwerer und unhandlicher als etwa eine Kreditkarte, weshalb sie für massenhafte Verbreitung als ungeeignet erscheint.

Der Erfindung liegt die Aufgabe zugrunde, ein Identifikationssystem der eingangs genannten Gattung zu schaffen, bei dem gegenüber herkömmlichen Systemen die Fälschungs- und Mißbrauchssicherheit weiter verbessert ist und das sich durch universelle Einsatzmöglichkeit und Benutzerfreundlichkeit auszeichnet.

Diese Aufgabe wird durch ein Identifikationssystem mit den Merkmalen des Anspruchs 1 gelöst.

Die Erfindung schließt die Erkenntnis ein, daß bei sichtbarem Licht für das menschliche Auge nicht erkennbare, nur in einem vorbestimmten Wellenlängenbereich im Ultravioletten herstell- und lesbare Kennzeichnungen auf dem Träger einer Kennzeichnung zunächst von einem potentiellen Fälscher nicht ohne weiteres als Kennzeichnungen wahrgenommmen werden und zudem nicht ohne Benutzung hochentwickelter technischer Hilfsmittel verändert werden können.

Hingegen sind das Erzeugen, Mitführen und Gebrauchen und das Lesen und Auswerten des derartige Kennzeichnungen aufweisenden Aufzeichnungsträgers durch die befugten Beteiligten ohne wesentliche Erschwernisse gegenüber herkömmlichen Kredit- oder Kundenkarten o.ä. möglich.

Die Nutzung der Aufzeichnungsträger des erfindungsgemäßen Identifikationssystems ist aber nicht nur anstelle solcher Karten, sondern auch allgemein als Ausweispapiere für Personen oder auch als Kennkarten für Tiere möglich.

Der zum erfindungsgemäßen Identifikationssystem gehörende Aufzeichnungsträger kann - in weiterer Ausbildung des der Erfindung zugrundeliegenden Gedankens - vorzugsweise eine oder mehrere weitere, sichtbare Kennzeichnung(en) tragen, die neben ihrer eigentlichen Funktion auch zur Verschleierung der nicht sichtbaren, eigentlichen Kennzeichnungsinformation dienen.

Die Vorrichtung zum Lesen und Auswerten kann dann insbesondere Mittel zum Lesen auch dieser wahrnehmbaren Kennzeichnung aufweisen, wobei eine besonders vorteilhafte Realisierung es den zu Identifizierenden nicht erkennen läßt, daß der Aufzeichnungsträger überhaupt eine unsichtbare Kennzeichnung trägt und die Vorrichtung zum Lesen und Auswerten auch diese liest, sondern bei ihm der Eindruck erweckt wird, relevant sei ausschließlich die von ihm wahrnehmbare Information. Hierdurch ist die Fälschungsgefahr weiter vermindert.

Von besonderer Bedeutung für die Erfindung ist also, daß sowohl die Erfassung als auch die Anbringung der Registrierung wie auch die Kontrolle der persönliche Merkmale betreffenden Daten verborgen für die zu kontrollierende Person erfolgt. Dies geschieht durch Erfassung von persönlichen Merkmalen durch Registrierungsgeräte, die dem Blickbereich der betreffenden Person verborgen, also hinter einer Blende oder einem Tisch angeordnet sind, oder gleichzeitig mit dem Erfassen einer anderen personenkennzeichnenden Information, wie beispielsweise der Unterschrift. Die Verbesserung der Fälschungssicherheit liegt darin ,daß die Person eine erkennbar der Identifizierung diendende Handlung vornimmt, während verdeckt eine zusätzliche Identifizierung anhand einer unsichtbaren zusätzlichen Identifizierungsinformation vorgenommen wird, so daß ein Fälscher diese nicht erkennt und auch keinen Anlaß hat nach ihr zu suchen.

Auch die Kontrolle der zusätzlichen (unsichtbaren) Information erfolgt für die zu kontrollierende Person verborgen hinter einer Blende insbesondere gleichzeitig mit der sichtbaren Abgabe einer Identifizierungsinformation.

Bei der Sicherung von Objekten ist Sicherungsinformation auf dem Objekt oder einer zugehörigen Kennkarte angebracht, das "Verbergen" bezieht sich auf eine das Objekt betreuende Person, beispielsweise bei deren Erwerb, bei deren Weiterveräußerung oder bei Reparaturfällen und beispielsweise bei der dabei erforderlichen Leistung von Unterschriften.

Die nicht wahrnehmbare, eigentlich relevante Kennzeichnung ist in einer bevorzugten Ausgestaltung in Form eines mit UV-Licht auf herkömmliche Weise oder eines synthetisch erzeugten Hologramms gespeichert, was den wesentlichen Vorteil hat, daß die Kennzeichnung auch bei beschädigter oder nur noch teilweise vorhandener Karte reproduzierbar sein kann.

Wird ein synthetisch erzeugtes Hologramm eingesetzt, so wird dieses vorzugsweise mittels einer Integraltransformation - etwa auf einem Personalcomputer - erzeugt und reproduziert. Es muß nicht notwendig - wie dies bei Nutzung natürlichen kohärenten Lichts geschieht - eine Fourier- oder Laplace-Transformation stattfinden, sondern es kann z.B. auch eine Laplace-Transformation zugrundegelegt werden.

In diesem Falle ist die Kennzeichnung auch bei Beleuchtung mit dem Licht des "richtigen" Wellenlängenbereiches nicht mit dem Auge lesbar, was die Fälschungssicherheit weiter erhöht.

Die Kennzeichnung selbst enthält im Falle der Kennzeichnung von Personen zweckmäßigerweise eine die Person möglichst eindeutig individualisierende, aber auch (unter den konkreten Bedingungen des Einsatzfalles) hinreichend scnell, unaufwendig und zuverlässig auswertbare Information. Als solche kommt insbesondere ein Brustbild ("Paßbild"), ein Fingerabdruck oder eine Handschriften- oder Sprachprobe in Frage, wobei sich Paßbild und Handschriftenprobe für eine visuelle Auswertung eignen, das Auswertungsergebnis aber bei weitem nicht denselben Grad an Zuverlässigkeit aufweist wie bei einem Fingerabdruck oder einer Sprachprobe, die allerdings wiederum eine rechnergestützte Auswertung erfordern.

Die Aufzeichnung einer Sprachprobe ist im Rahmen des erfindungsgemäßen Systems vorzugsweise in Form der optisch erfaßbaren Darstellung eines charakteristischen Frequenzdiagramms möglich.

Dabei kann der Aufzeichnungsträger ein gesondertes Dokument in Art einer Kennkarte, eines Fahrzeugbriefes oder eines Liefer- oder Begleitscheines und/oder auch ein funktionswesentliches und daher nur schwer entfernbares Teil des Gegenstandes oder der Gegenstand selbst (letzteres z.B. im Falle eines Gemäldes) sein.

Bevorzugt ist der Aufzeichnungsträger so ausgebildet, daß er mehrere Kennzeichnungen (z.B. "Paßbild" und Handschriftenprobe und/oder Fingerabdruck) trägt, die Vorrichtung zum Lesen und Erfassen ist so ausgebildet, daß sie während eines Identifizierungsvorganges die mehreren Kennzeichnungen liest und auswertet, und die Vergleichereinrichtung ist so ausgebildet, daß sie einen Vergleich der mehreren Kennzeichnungen mit mehreren aktuell erfaßten Merkmalen einer konkret zu identifizierenden Person bzw. eines Gegenstandes erlaubt.

Besonders zweckmäßig ist es, wenn das aktuelle Erfassen der kennzeichnenden, den Kennzeichnungen im Aufzeichnungsträger entsprechenden Merkmale in Verbindung mit bei der Übergabe des Aufzeichnungsträgers zur Prüfung üblichen Vorgängen erfolgt, ohne daß die übergebende Person von der Erfassung Kenntnis erhält.

Indem eine dazu geeignete Vorrichtung dazu dient, das Vorhandensein der Kennzeichnungsinformation im Aufzeichnungsträger zusätzlich zu verschleiern, wird die Fälschungs- und Mißbrauchsgefahr weiter verringert.

Dies geschieht etwa durch Erfassung einer Schriftprobe (Unterschrift) über eine drucksensitive Schreibunterlage bei gleichzeitiger Erfassung des "Fingerabdrucks" mittels eines (verdeckt) mit einem entsprechenden optischen System versehenen Schreibgerätes, das die auf ihre Identität zu überprüfende Person zur Leistung der Unterschrift benutzt, und/oder Still-Video-Aufnahme des Unterschreibenden mittels einer verdeckt angeordneten Kamera und/oder die unbemerkte Aufnahme einer Sprachprobe.

Weiterhin wird die nicht sichtbare Kennzeichnungsinformation für die zu überprüfende Person verdeckt mit deren aktuellen Merkmalen verglichen und auf Grund des Ergebnisses des Vergleichs ein die Identität der Person feststellendes Signal ausgegeben. Bei einem durch einen menschlichen Beobachter durchgeführten Vergleich erfolgt dies mittels eines für die zu überprüfende Person nicht einsehbaren Bildschirms.

Es ist auch möglich, in einem System entsprechend der Erfindung mehrere Klassen von Lese- und Auswertungsvorrichtungen vorzusehen, die nicht sämtlich eine vollständige Auswertung aller dem Aufzeichnungsträger aufgeprägten Kennzeichnungen (mit dem entsprechenden Aufwand) erlauben, sondern über abgestufte Möglichkeiten verfügen.

Eine solche Handhabung wäre insbesondere in einem integrierten System der Personenidentifizierung mittels einer Ausweiskarte sinnvoll, im Zusammenhang mit der die Prüfung der Identität des Vorlegenden nicht in allen Lebenssituationen (vgl. z.B. einfache Banktransaktion und Bibliotheksbesuch) die gleiche Bedeutung hat.

Anstelle der Einrichtung zum aktuellen Erfassen und der Vergleichereinrichtung kann - zumindest bei weniger hochwertigen Komponenten eines Systems im Sinne des vorigen Absatzes - die visuelle Prüfung der Übereinstimmung zwischen Merkmal(en) und Kennzeichnung(en) - etwa durch den Schalterangestellten einer Bank oder Behörde - vorgesehen sein, ohne daß der Bereich der Erfindung damit verlassen wird.

Weitere Merkmale und Zweckmäßigkeiten der Erfindung ergeben sich aus der Erläuterung von Ausführungsbeispielen anhand der Figuren.

Von den Figuren zeigen:
Fig. 1 eine Prinzipdarstellung der Vorrichtung zum Aufprä gen von Kennzeichnungen auf einen Aufzeichnungsträger eines Identifikationssystems nach einer ersten Ausführungsform der Erfindung,
Fig. 2 eine perspektivische Darstellung der Vorrichtung zum Lesen und Auswerten der Kennzeichnung des Identifikationssystems nach der ersten Ausführungsform während der Benutzung,
Fig. 3 eine Prinzipdarstellung der Vorrichtung zum Lesen und Auswerten nach Fig. 2 zusammen mit ihr nachgeordneten Baugruppen des Identifikationssystems und
Fig. 3a eine Variante der Vorrichtung nach Fig. 3,
Fig. 4 eine Prinzipdarstellung der Vorrichtung zum Aufprägen einer Kennzeichnung auf zwei verschiedene Aufzeichnungsträger eines Identifikationssystems nach einer zweiten Ausführungsform der Erfindung.

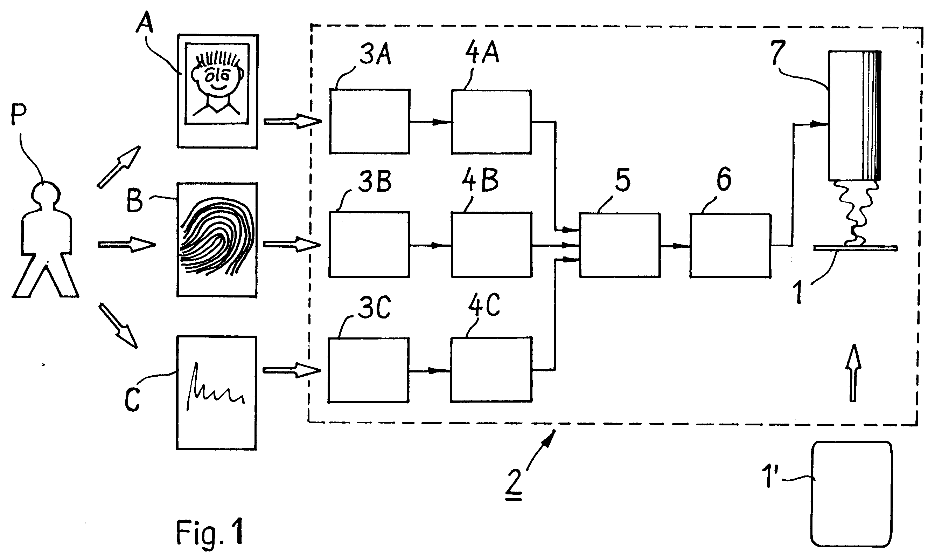

Wie Fig. 1 zeigt, werden von einer Person P, die eine Kennkarte 1 erhalten soll, ein Paßbild A angefertigt und ein Fingerabdruck B sowie eine Unterschriftenprobe C registriert. Diese Träger von Informationen über die Person P werden einer Vorrichtung 2 zum Aufprägen der Kennzeichnungen IA, IB und IC auf die ebenfalls der Vorrichtung 2 zugeführte unbehandelten (Roh-)Kennkarte 1' zugeführt.

Die Vorrichtung zum Aufprägen 2 besteht im wesentlichen aus je einer Einheit 3A, 3B und 3C zur Aufbereitung der drei jeweils in Form eines Bildes zugeführten Informationen IA, IB und IC in digitaler Form. Die digitalisierten Informationen werden als Kennzeichnungsdaten jeweils einem Speicher 4A, 4B und 4C zugeführt, aus dem sie durch eine Verarbeitungseinheit 5 abgerufen werden können. Eine erste Verarbeitungseinheit 5 unterwirft die Daten IA, IB und IC nacheinander einer Integraltransformation und gewinnt dadurch aus den Daten Transformierte F(IA), F(IB) und F(IC), die als Ansteuersignale der Ansteuereinheit 6 eines die Oberfläche der Roh-Kennkarte 1' aus Karton oder Kunststoffmaterial bestrahlenden, im tiefen UV-Bereich arbeitenden Excimerlasers 7 zugeführt werden.

Die Strahlung des Lasers 7 wird durch einen (nicht gezeigten) Strahlteiler in zwei Teilstrahlen aufgespalten, von denen der eine als Referenzstrahl zur Erzeugung eines Flächenhologramms dient und der andere über die Ansteuereinheit 6 als Pseudo-Objektstrahl mit den Transformierten F(IA), F(IB) und F(IC) intensitäts-moduliert wird, wobei die Strahlintensität in einem solchen Bereich liegt, daß dem Material der Karte infolge Resonanzabsorption durch die Moleküle des Materials ein latentes Bild eingeprägt wird, ohne daß die Oberfläche der Karte sichtbare oder spürbare Veränderungen aufweist.

Die Kennzeichnungen IA, IB und IC sind dadurch dem Träger derart eingeprägt, daß ihre Beseitigung allenfalls durch "Überschreiben" mittels einer exakt der Vorrichtung zum ursprünglichen Einschreiben entsprechenden Vorrichtung möglich wäre. Auch damit ließe sich aber nicht ohne weiteres eine zweite, andere Kennzeichnung vornehmen.

Auf diese Weise werden in der fertigen Kennkarte 1 die Kennzeichnungen IA, IB und IC für die Person P als durch die Integraltransformation in Art eines synthetischen Hologramms verschlüsselte latente, nur im kohärenten UV-Licht lesbare und durch inverse Integraltransformation des bei der Verschlüsselung angewandten Typs entschlüsselbare Bilder gespeichert.

Die dem Aufzeichnungsträger so eingeprägten Kennzeichnungen sind für die menschlichen Sinnesorgane ohne hochentwickelte technische Hilfsmittel nicht wahrnehmbar - insbesondere unsichtbar und nicht tastbar - und auch im Falle gelungener Sichtbarmachung nicht ohne Kenntnis der zur Verschlüsselung angewandten Transformationsfunktion lesbar.

Nach dem beschriebenen Aufprägen der Kennzeichnungen kann die Kennkarte sichtbar mit anderen Kennzeichnungen versehen, z.B. bedruckt werden, was zusätzlich der Verschleierung des Vorhandenseins der tatsächlich einer Identifizierung dienenden Kennzeichnungen beitragen kann.

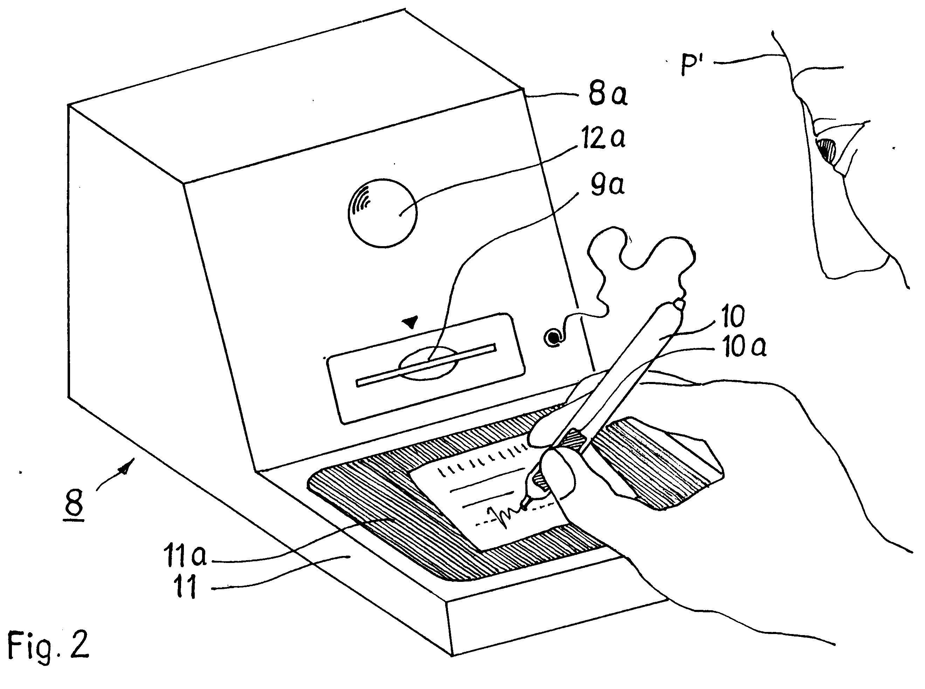

In Fig. 2 ist anschaulich ein Vorgang der Benutzung einer Vorrichtung 8 zum Lesen und Auswerten der Kennzeichnungen - etwa durch einen Bankkunden bei der automatisierten Einlösung eines Schecks - dargestellt.

Ein Benutzer P' hat die Kennkarte 1 in einen Kartenleser 9 eingeführt und unterschreibt mit einem mit dem Gehäuse 8a der Vorrichtung 8 verbundenen Spezialschreibgerät 10 auf einer Schreibunterlage 11 einen Scheck, wobei sich sein Gesicht im Aufnahmefeld des (dem Benutzer P' verborgenen) Objektivs 12a einer Still-Video-Kamera 12 befindet.

Während des Unterschreibens des Schecks wird mittels einer in das Spezialschreibgerät 10 eingebauten Beleuchtungs- und Aufnahmeoptik (Leuchtdioden und Optik mit Bildaufnahmesensor) über ein (unsichtbares) Fenster 10a die Papillarlinienstruktur des Daumens des Benutzers P und mittels eines drucksensitiven Feldes 11a der Schreibunterlage 11 die Unterschrift registriert, während von dem Benutzer zugleich eine Still-Video-Aufnahme gefertigt wird.

Es ist ersichtlich, daß die Erfassung der aktuellen charakteristischen Merkmale für die Person verdeckt vorgenommen und mit der unsichtbaren Information verglichen wird, während die Person eine unverdeckte Identifizierungsfunktion veranlaßt, welche scheinbar die einzige ist.

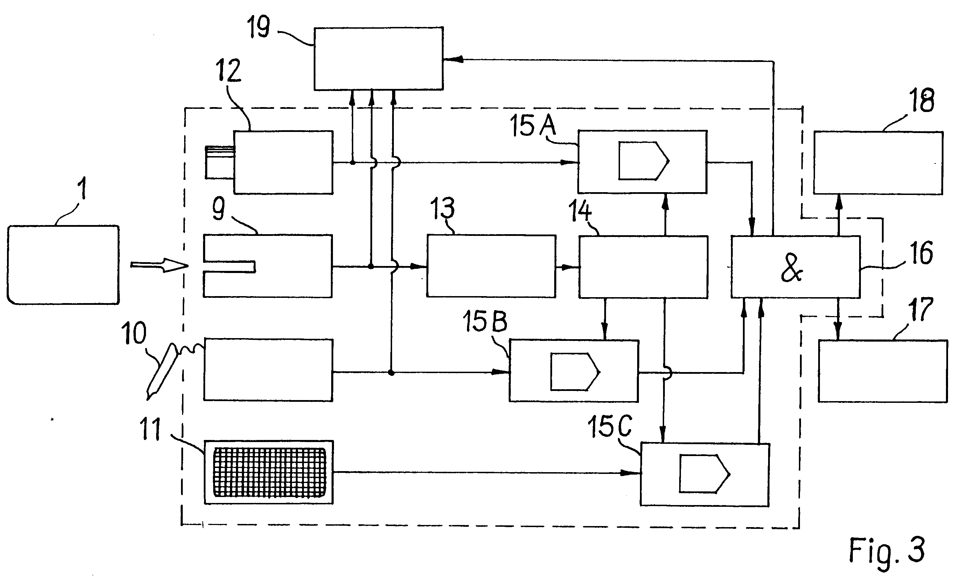

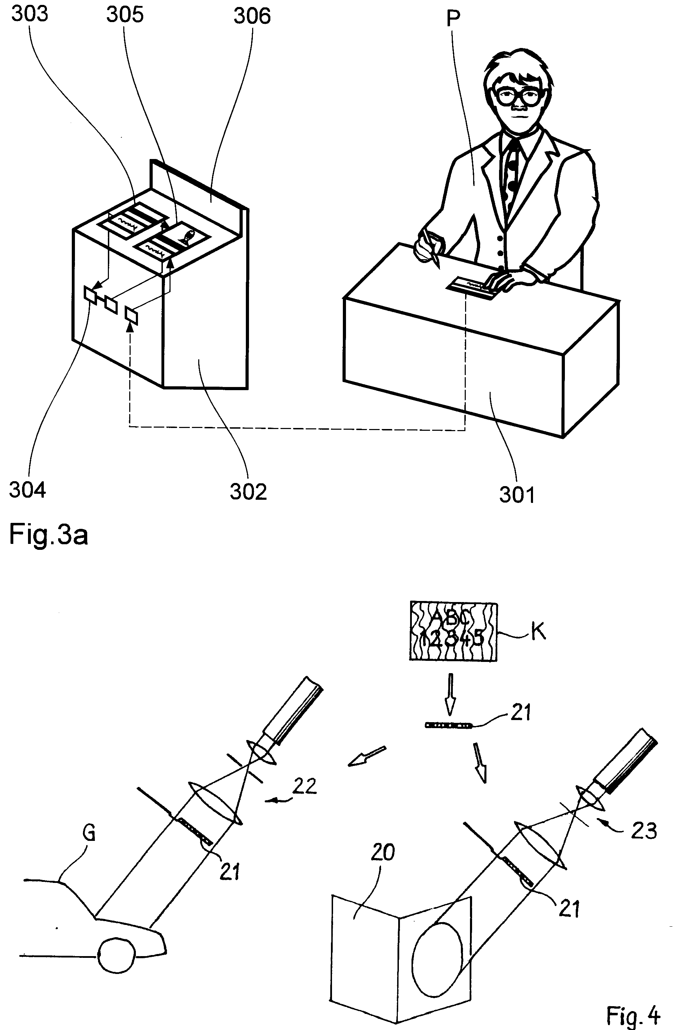

Die Baugruppen zur Verarbeitung dieser Informationen sind schematisch in Fig. 3 in ihrer Verknüpfung dargestellt:

Während der mit einer für den Wellenlängenbereich des zum Schreiben der Kennzeichnung in die Kennkarte benutzten Lasers ausgelegten UV-Beleuchtungsoptik arbeitende Kartenleser 8 die Kennzeichnungen liest, diese in einer zweiten Verarbeitungseinheit 13 einer Aufbereitung - insbesondere einer zur Verschlüsselungs-Transformation inversen Integraltransformation - unterzogen und in einem Arbeitsspeicher 14 zwischengespeichert werden, werden gleichzeitig die von der Person P' aufgenommenen aktuellen Daten aufbereitet.

Nach Abschluß der Datenaufbereitung - die auf herkömmliche Weise geschieht - werden die über die Videokamera 12, die Bildaufnahmesensoren des Spezialschreibers 10 und die drucksensitive Platte 11a gewonnenen, bereits geeignet formatierten Daten sowie jeweils die entsprechenden Daten der Kennzeichnungsinformation IA, IB bzw. IC jeweils einem Vergleicher 15A, 15B bzw. 15C zugeführt, in denen die Kennzeichnung (der Person P) und das korrespondierende aktuell erfaßte Merkmal (der Person P') miteinander verglichen werden.

Das jeweilige Vergleichsergebnis aller drei Vergleicher 15A, 15B und 15C wird als Ja/Nein-Information einem UND-Gatter 16 zugeführt, dessen Ausgangssignal bei Übereinstimmung aller drei oder wahlweise nur zweier der Daten eine Freigabeschaltung 17, bei Nichtübereinstimmung aber eine Alarmierungsvorrichtung 18 und gleichzeitig einen Sicherheitsspeicher 19 aktiviert, in den daraufhin die durch die Videokamera 12, den Spezialschreiber 10 und die drucksensitive Platte 11a aufgenommenen aktuellen Daten für den Fall eingespeichert werden, daß die Person P' die Kennkarte mißbräuchlich zu benutzen versucht hat. Diese Daten können dann gegebenenfalls die polizeilichen Ermittlungen erleichtern.

Anschließend kann eine Aufklärung der Identität der Person P' und - falls sich entgegen der Meldung des Identifikationssystems deren Zugriffsberechtigung herausstellt - eine persönliche Bedienung durch Angestellte des Betreibers des Identifikationssystems erfolgen.

Die vom Benutzer P' unbemerkte Erfassung seiner den Kennzeichnungen entsprechenden physischen Merkmale und/oder Handschrift o.ä. kann auch mit anderen als den beschriebenen konkreten Mitteln bewerkstelligt werden, etwa durch optisches Abtasten der Unterschrift, nachdem diese vorliegt, unbemerkte Aufnahme einer Sprachprobe bei Vorbringen des Anliegens usw..

Anstelle einer oder mehrerer der im beschriebenen Beispiel zugrundegelegten Kennzeichnungen oder ggf. auch zusätzlich zu diesen können in modifizierten Ausführungsformen Kennzeichnungen von zu identifizierenden Personen zugrundegelegt werden - etwa charakteristische Körpermaße oder ein aus einer Sprechprobe gewonnenes Sprachfrequenzdiagramm.

Es ist auch möglich, nur eine oder zwei Kennzeichnungen zu verwenden, um den tecnnischen Aufwand gering zu halten.

Bei einer abgewandelten Ausführungsform geben die Vergleicher 15A, 15B und 15C keine Ja/Nein-Aussagen, sondern Wahrscheinlichkeitswerte aus, und das UND-Gatter 16 ist durch eine logische Schaltung zur Verknüpfung dieser Wahrscheinlichkeitswerte mit nachgeordneter Schwellwertschaltung ersetzt, die die Freigabeschaltung bei Überschreitung, die Alarmierungsvorrichtung und den Sicherheitsspeicher hingegen bei Unterschreitung eines vorbestimmten resultierenden Wahrscheinlichkeitswertes für die Identität der Personen P und P' aktiviert.

Es ist nicht erfindungswesentlich, daß die Kennzeichnungsinformationen als synthetische Hologramme gespeichert werden.

Vielmehr ist in einer modifizierten Ausführung die Verwendung fotografischer Negative des Paßbildes A, des Fingerabdrucks B und der Schriftprobe C als Objekte zur Erzeugung eines "klassischen" Hologramms vorgesehen und in einer weiteren angewandelten Ausführungsform der völlige Verzicht auf eine holografische Speicherung der Kennzeichnungsinformationen und deren Ersatz durch eine unverschlüsselte UV-Einbelichtung der bildlichen Darstellungen.

In Fig. 3a ist ersichtlich, daß die wenn die Person P zum Ausführen einer Transaktion auf dem Tisch 301 eine Unterschrift leistet, neben der sichtbaren Unterschrift auf dem Tisch diese durch (nicht dargestellte) Scan-Mittel innerhalb des Tisches abgefragt wird. Ein Kontroll-Tisch 302 für eine Bedienungsperson zum nicht automatischen Vergleich der Merkmale wird die Informationsträger 303 der Identifikationsinformation aufgelegt, der eine sichtbare und eine unsichtbare Wiedergabe der Unterschrift sowie eine unsichtbare Wiedergabe des Bildes der Person aufweist.

Letztere werden über Auswertungseinheiten 304 verarbeitet und an eine Bildwiedergabevorrichtung (Display) 305 weitergegeben. Damit sind sämtliche Informationen einschließlich der Originalmerkmale der Person für die Bedienungsperson sicht- und vergleichbar. Das Display 305 ist für die Person P durch eine Blende 306 verdeckt.

In Fig. 4 ist als Prinzipskizze eine zweite Ausführungsform der Erfindung verdeutlicht, die sich auf die Kennzeichnung und Identifizierung von diebstahlgefährdeten Gegenständen, z.B. Autos, bezieht. Die Mittel zur Identifizierung und zur Heraufsetzung der Fälschungssicherheit beziehen sich in diesem Fall auf die das Objekt betreuende Person, wobei dann anstelle der körperlichen Merkmale die Merkmale des Objekts treten.

Hierbei wird von einem Produktionskennzeichen K für einen Gegenstand G ausgegangen, das sowohl weitgehend fälschungssicher dem Gegenstand (hier: einem Auto) selbst als auch einem Begleitdokument 20 (hier: Fahrzeugbrief) aufgeprägt werden soll.

Aus dem Kennzeichen K wird zunächst ein transparentes Negativ 21 hergestellt.

Dieses wird zum einen in den Objektstrahlengang einer UV-Holografieapparatur 22 gebracht, die auf den Kotflügel des Autos G gerichtet und deren Arbeits-Wellenlänge auf das bevorzugte Resonanzfrequenzband des Lacks abgestimmt ist und die - analog zur beim ersten Ausführungsbeispiel erläuterten Weise - im Lack des Kotflügels aufgrund der Resonanzabsorption durch die Lackmoleküle ohne äußere Schädigung ein UV-Flächenhologramm des Produktionskennzeichens erzeugt.

Zum anderen wird das Negativ 21 in den Objektstrahlengang einer zweiten Holografieapparatur 23 gebracht, mit der das Papier des Fahrzeugbriefes mit einer auf dessen Resonanzkurve abgestimmten Wellenlänge bestrahlt und in diesem ebenfalls ein Flächenhologramm des Produktionskennzeichens erzeugt wird.

Bei einer Prüfung der Identität von Fahrzeug und Fahrzeugbrief werden beide mit kohärentem UV-Licht der entsprechenden Wellenlänge bestrahlt, womit das Hologramm wieder sichtbar gemacht wird und Vorhandensein und Übereinstimmung der beiden Kennzeichnungen festgestellt werden können.

Statt des Lacks können andere nichtmetallische Teile eines Fahrzeuges oder anderen Gegenstandes als Aufzeichnungsträger dienen, d. h. mit der Kennzeichnung versehen sein.

Das System ist auch für Einsatzfälle brauchbar, wo nicht - wie beim ersten Beispiel - eine Kennkarte die Kennzeichnung trägt oder - wie beim zweiten Beispiel - Begleitdokument und Gegenstand gekennzeichnet sein sollen, sondern wo ausschließlich der Gegenstand zu kennzeichnen ist, etwa für Kunstgegenstände oder prinzipiell auch für Banknoten. Über die angegebenen Ausführungsbeispiele und deren erwähnte Abwandlungen hinaus ist eine Vielzahl weiterer Varianten denkbar, die von der beanspruchten Lösung auch bei anders gearteten Einzelheiten Gebrauch machen.

## Patentansprüche

1. Identifikationssystem für eine Person (P, P') oder einen Gegenstand mit
- einem Aufzeichnungsträger (1; G, 20), der mindestens eine mit den menschlichen Sinnesorganen nicht wahrnehmbare, für eine bestimmte Person (P, P') oder einen Gegenstand (G) charakteristische Kennzeichnung (IA, IB, IC; K) trägt,
- einer Vorrichtung (2; 22, 23) zur Aufprägung der Kennzeichnung (IA, IB, IC; K) auf den Aufzeichnungsträger (1; G, 20) und
- einer Vorrichtung (8) zum Lesen und Auswerten der Kennzeichnung,
**dadurch gekennzeichnet,**
daß der Aufzeichnungsträger (1; G, 20) eine nur in ultraviolettem Licht eines vorbestimmten Wellenlängenbereiches lesbare Aufzeichnung trägt, die die Kennzeichnung (IA, IB, IC; K) enthält und
daß die Vorrichtung zum Aufprägen (2; 22, 23) eine Einrichtung zur Erzeugung (7) und die Vorrichtung (8) zum Lesen und Auswerten eine Einrichtung zum Lesen der Aufzeichnung mittels des ultravioletten Lichts aufweisen.

2. Identifikationssystem nach Anspruch 1 , **dadurch gekennzeichnet,** daß die Vorrichtung (8) zum Lesen und Auswerten für die zu identifizierende Person oder die ein Objekt betreuende Person durch eine Blende oder durch Anbringung unterhalb einer Schreibunterlage nicht einsehbar ist, oder daß der Vorrichtung zum Lesen und Auswerten eine von der Person (P, P') oder der ein zu identifizierendes Objekt zu betreuenden Person durch eine Blende oder durch Anbringung unterhalb einer Schreibunterlage nicht einsehbare oder erkennbare Vorrichtung zur sichtbaren Darstellung der mit den menschlichen Sinnesorganen wahrnehmbaren Kennzeichnung (IA, IB, IC; K) nachgeschaltet ist.

3. Identifikationssystem nach Anspruch 1 , **dadurch gekennzeichnet,** daß die Vorrichtung (8) zum Lesen und Auswerten eine Einrichtung (10, 11, 12) zum aktuellen Erfassen eines der charakteristischen Kennzeichnung (IA, IB, IC; K) entsprechenden Merkmals einer Person (P, P') oder eines Gegenstandes (G) und eine Vergleichereinrichtung (15A bis 15C) zum Vergleichen des aktuell erfaßten Merkmals mit der nicht wahrnehmbaren Kennzeichnung (IA, IB, IC; K) aufweist.

4. Identifikationssystem nach Anspruch 1 , **dadurch gekennzeichnet,** daß die Vorrichtung (8) zum Lesen und Auswerten eine Einrichtung (10, 11, 12) mit einer Vorrichtung zum Erfassen einer durch die zu identifizierende Person oder eine das zu identifizierende Objekt betreuende Person zu leistenden Schriftprobe oder Unterschrift verbunden ist.

5. Identifikationssystem nach einem der Ansprüche 1 bis 4 , **dadurch gekennzeichnet**, daß die Kennzeichnung (IA, IB, IC; K) in einem mit ultraviolettem Licht erzeugten und rekonstruierbaren Hologramm enthalten ist.

6. Identifikationssystem nach einem der Ansprüche 1 bis 4 , **dadurch gekennzeichnet,** daß die Kennzeichnung (IA, IB, IC; K) in einem rechnergestützt erzeugten und rekonstruierbaren synthetischen Hologramm enthalten ist.

7. Identifikationssystem nach Anspruch 6, **dadurch gekennzeichnet,** daß das synthetische Hologramm ein unter Anwendung einer Integraltransformation auf die ursprügliche Kennzeichnungsinformation erzeugtes und rekonstruierbares Hologramm ist.

8. Identifikationssystem nach einem der Ansprüche 1 bis 7 , **dadurch gekennzeichnet**, daß die Kennzeichnung (IA, IB, IC; K) eine bildliche Darstellung der Person (P) oder des Gegenstandes (G) oder mindestens eines physischen Merkmals der- bzw. desselben, vorzugsweise des Fingerabdrucks der Person (P) oder einer Fertigungsnummer (K) des Gegenstandes (G), aufweist.

9. Identifikationssystem nach einem der Ansprüche 1 bis 8, **dadurch gekennzeichnet**, daß die Kennzeichnung (IA, IB, IC; K) eine Handschriftenprobe (C) oder ein Sprachfrequenzbild der Person (P) aufweist.

10. Identifikationssystem nach einem der Ansprüche 3 bis 9, **dadurch gekennzeichnet**, daß der Aufzeichnungsträger (1; G, 20) mehrere Kennzeichnungen (IA, IB, IC; K) trägt, die Vorrichtung zum Lesen (8) so ausgebildet ist, daß sie während eines Identifizierungsvorganges die mehreren Kennzeichnungen (IA, IB, IC; K) liest und auswertet und die Vergleichereinrichtung (15A-15C) zum Vergleichen mehrerer Kennzeichnungen mit mehreren aktuell erfaßten Merkmalen ausgebildet ist.

11. Identifikationsssystem nach einem der Ansprüche 3 bis 10, **dadurch gekennzeichnet**, daß die Einrichtung (10, 11, 12) zum aktuellen Erfassen eines Merkmals der Person (P') oder des Objekts derart ausgebildet ist, daß die aktuelle Erfassung eines physischen Merkmals der Person (P') oder des Objekts für die Person oder die das Objekt betreuende Person durch eine Blende oder Schreibungerlage verdeckt erfolgt.

12. Identifikationssystem nach einem der Ansprüche 3 bis 11 , **dadurch gekennzeichnet,** daß die Einrichtung (10, 11, 12) zum aktuellen Erfassen während eines Schreibvorganges die Unterschrift und die Papillarlinienstruktur eines Fingers oder Daumens des Schreibenden (P') erfaßt.

13. Identifikationssystem nach einem der Ansprüche 1 bis 12 , **dadurch gekennzeichnet,** daß die Vorrichtung zum Aufprägen (2; 22, 23) eine Vorrichtung zum Erzeugen eines latenten Bildes im Aufzeichnungsträger mittels hochenergetischer UV-Laserstrahlung ohne äußerliche Veränderung des Aufzeichnungsträgers (1; G, 20) aufweist.

14. Identifikationssystem nach einem der Ansprüche 1 bis 13, **dadurch gekennzeichnet**, daß der Aufzeichnungsträger (1; G, 20) neben der mit den menschlichen Sinnesorganen nicht wahrnehmbaren Kennzeichnung (IA, IB, IC; K) eine wahrnehmbare Kennzeichnung trägt, neben der nicht wahrnehmbaren Kennzeichnung vorgesehen ist oder diese mindestens teilweise verdeckt.
